# EUROPÄISCHE PATENTSCHRIFT

(11) **EP 2 820 332 B1**
(45) Veröffentlichungstag und Bekanntmachung des Hinweises auf die Patenterteilung: **28.03.2018**
(21) Anmeldenummer: 13704041.6
(22) Anmeldetag: 01.02.2013
(51) Int. Cl.: F16H 55/08, B64C 27/12

(54) **ZAHNRADSATZ, INSBESONDERE FÜR EIN DREHFLÜGELFLUGZEUG**
GEARWHEEL SET, IN PARTICULAR FOR A GYROPLANE
TRAIN D'ENGRENAGES, EN PARTICULIER POUR UN GIRAVION

(30) Priorität: 01.03.2012 DE 102012203177
(43) Veröffentlichungstag der Anmeldung: 07.01.2015
(73) Patentinhaber: ZF Friedrichshafen AG, 88046 Friedrichshafen (DE)
(72) Erfinder: LIEDER, Sergej, 34119 Kassel (DE); RUHLAND, Reinhold, 78467 Konstanz (DE)
(86) Internationale Anmeldenummer: PCT/EP2013/051980
(87) Internationale Veröffentlichungsnummer: WO 2013/127595

(56) Entgegenhaltungen:
- WO-A2-2011/147582
- DE-A1- 2 320 340

## Beschreibung

Die vorliegende Erfindung betrifft einen Zahnradsatz, insbesondere für ein Drehflügelflugzeug, mit zwei in Eingriff stehenden auf jeweils einer Welle gelagerten Zahnrädern.

Zahnradsätze sind im Stand der Technik schon seit langem bekannt. Hierbei stehen zwei an deren Außenumfang mit Zähnen versehene Zahnräder in Eingriff miteinander. Jedes Zahnrad ist verdrehfest auf einer seinen Drehpunkt bildenden Welle gelagert.

Zahnradsätze können unterschiedliche Zahnprofile aufweisen. Ein verbreitetes Zahnprofil ist die sogenannte Evolventenverzahnung, bei der beide Zahnflanken der an dem Zahnrad ausgebildeten Zähne eine Evolvente bilden. Die Evolventenverzahnung zeichnet sich dadurch aus, dass ein auf dem Gebiet der Verzahnungstechnik oftmals mit α bezeichneter Eingriffswinkel - ein Winkel zwischen der Tangente an den Wälzkreis im auf dem Gebiet der Verzahnungstechnik oftmals mit C bezeichneten Wälzpunkt und der Eingriffsnormalen - während der bei dem Eingriff der Zähne durchlaufenen Eingriffsstrecke konstant ist. Als Eingriffsnormale wird hierbei die Normale auf die Tangente im jeweiligen momentanen Berührpunkt der Zahnflanken von zwei im Eingriff miteinander stehenden Zähnen bezeichnet.

Durch den geometrischen Ort der Berührpunkte während des Eingriffes - der Eingriffsstrecke - und damit der Variation des Eingriffswinkels α ist die Zahnprofilgeometrie - und damit die Form der Zahnflanken - eindeutig bestimmt. Jedem Punkt (Abschnittsbereich) der Zahnflanke kann somit ein dem Eingriffswinkel α entsprechender Flankenwinkel α zugeordnet werden.

Im Stand der Technik bekannte Evolventenzahnräder weisen üblicherweise einen Eingriffswinkel α von 14,5°, besonders bevorzugt 20° oder 25° auf. Dementsprechend beträgt der jeweilige Flankenwinkel α beider Zahnflanken eines jeden Zahnes an jedem Punkt (Abschittsbereich) der Zahnflanke an dem sich zwei gegenüberliegende Zahnflanken während des Eingriffes berühren (nutzbare Zahnfalkenfläche) 14,5°, besonders bevorzugt 20° oder 25°. Das Zahnprofil und damit die Zahnflanken ist/sind bei der Evolvetenverzahnung symmetrisch.

Eine Kraftübertragung zwischen den Zahnflanken erfolgt bei dem gattungsgemäßen Zahnradsatz immer in Richtung der Eingriffsnormalen. Bezogen auf den Wälzkreis des Zahnrades kann eine während des Eingriffs von einer gegenüberliegenden Zahnflanke des anderen Zahnrades auf dieses einwirkende Normalkraft in eine Umfangsrichtungskraftkomponente und einer Radialkraftkomponente zerlegt werden. Bei einer Schrägverzahnung, bei der die Zähne um einen Schrägungswinkel β gegen die Drehachse geneigt ausgebildet sind, tritt zusätzlich zu der bei gerade verzahnten Zahnrädern wirkenden Umfangsrichtungskraftkomponente und Radialkraftkomponente eine sogenannte Axialkraftkomponente auf. Eine effektive Kraftübertragung hängt somit von der Zahnflankengeometrie und damit dem Flankenwinkel α und dem Eingriffswinkel α ab.

Für einen geräuscharmen Lauf der Zahnräder des Zahnradsatzes ist die Wahl der sogenannten Profilüberdeckung wichtig. Bevorzugt wird deshalb im Hinblick hierauf eine lange Eingriffsstrecke, was einer erhöhten Profilüberdeckung (Verhältnis von Eingriffslänge zu Teilung) entspricht.

Je länger die Eingriffsstrecke und damit je höher die Profilüberdeckung ist, desto niedriger ist für die üblichen symmetrischen Zahnprofile zwangsläufig der Flankenwinkel α bzw. der Eingriffswinkel α.

Um die Lebensdauer der Zahnräder zu erhöhen müssen die Zahnfuß- und/oder Zahnflankentragfähigkeiten durch die Wahl eines erhöhten Flankenwinkels α erhöht werden.

Aufgrund des symmetrischen Zahnprofils der in gattungsgemäßen Zahnradsätzen enthaltenen Zahnräder ergeben sich widerstreitende Anforderungen: Große Zahnflankenwinkel α bzw. Eingriffswinkel α sind im Hinblick auf die Lebensdauer zu bevorzugen; eine Maximierung der Profilüberdeckung ist für einen geräuscharmen Lauf zu bevorzugen, welche einen niedrigen Flankenwinkel α und Eingriffswinkel α mit sich bringt.

Ein Zahnradsatz mit Evolventenverzahnung ist aus DE 23 20 340 A1 bekannt.

WO 2011/147582 A2 offenbart einen Zahnradsatz gemäß dem Oberbegriff des geltenden Patentanspruchs 1.

Der vorliegenden Erfindung liegt das Problem zugrunde, einen Zahnradsatz der eingangs genannten Art insbesondere für ein Drehflügelflugzeug anzugeben, welcher eine erhöhte Lebensdauer hat.

Auch will die vorliegende Erfindung ein Drehflügelflugzeuggetriebe, sowie einen Antriebsstrang für ein Drehflügelflugzeug und ein Drehflügelflugzeug, mit jeweils erhöhter Lebensdauer angeben.

Zur Lösung dieses Problems wird ein Zahnradsatz, insbesondere für ein Drehflügelflugzeug mit den Merkmalen von Anspruch 1 angegeben. Dieser unterscheidet sich vom Stand der Technik dadurch, dass die Summe des jeweiligen Eingriffswinkels α auf der Antriebsseite, welcher sich an dem Berührpunkt bei Drehung der Zahnräder in Vorzugsrichtung ergibt, und des Eingriffswinkels α' auf der freilaufenden Seite an dem jeweiligen entsprechenden Berührpunkt, welcher sich bei Drehung der Zahnräder entgegen der Vorzugsrichtung ergibt, konstant ist.

Die vorliegende Erfindung gibt somit einen Zahnradsatz an, dessen Zahnräder zur Übertragung eines Momentes in nur einer Vorzugsrichtung gedreht werden. Dementsprechend ist das Zahnprofil der an den Zahnrädern ausgebildeten Zähne nicht symmetrisch ausgeführt. Die Geometrie der zwei Zahnflanken eines Zahnes, somit auch der Flankenwinkel α, α' und der Eingriffswinkel α, α' sind zumindest zu Beginn des Eingriffs unterschiedlich gewählt. Die Geometrie von sich jeweils während des Eingriffs gegenüberliegenden Zahnflanken der Zähne von unterschiedlichen Zahnräder ist hingegen vorzugweise die Selbe.

Weil der Zahnradsatz insbesondere dafür ausgelegt ist, die Übertragungsfunktion nur in einer Drehrichtung zu optimieren, werden zwei sich bei Drehung der Zahnräder in Vorzugsrichtung zur Übertragung des Momentes anliegende Zahnflanken als antriebsseitige Zahnflanken und die jeweils zwei anderen sich bei auf einer freilaufenden Seite bei Drehung der Zahnräder in Vorzugsrichtung im Eingriff gegenüberliegende Zahnflanken als freilaufseitige Zahnflanken bezeichnet. Jeder Zahn weist dementsprechend eine antriebsseitige Zahnflanke und eine freilaufseitige Zahnflanke auf.

Bei der Übertragung des Momentes laufen die sich gegenüberliegenden freilaufenden Zahnflanken vorzugsweise frei, wohingegen die antriebsseitigen Zahnflanken sich zu der Übertragung des Momentes an einem Punkt (Abschnittsbereich) berühren.

Während des Eingriffs der Zähne der beiden Zahnräder bei Drehung in eine vorgegebene Vorzugsrichtung berühren sich die gegenüberliegenden antriebsseitigen Zahnflanken in einem als Eintrittsberührpunkt bezeichneten Punkt erstmalig zu Beginn des Eingriffs und in einem als Austrittsberührpunkt bezeichneten Punkt letztmalig. Die Normale zu der Tangente in dem Eintrittsberührpunkt durch den - auf dem Gebiet der Verzahnungstechnik oftmals mit C bezeichneten - Wälzpunkt schneidet die Tangente an dem Wälzkreis im Wälzpunkt C unter dem Eingriffswinkel α.

In dem Eintrittsberührpunkt weisen die jeweiligen antriebsseitigen Zahnflanken einen dem Flankenwinkel α in dem Eintrittberührpunkt entsprechenden und somit durch die Zahnflankengeometrie vorgegebenen Eingriffswinkel α auf. Bei Drehung entgegen der Vorzugsrichtung berühren sich die freilaufseitigen Zahnflanken der Zähne der beiden in Eingriff stehenden Zahnräder ebenso wie die antriebsseitigen Zahnflanken bei Drehung der Zahnräder in Vorzugsrichtung erstmalig in einem weiteren Eintrittsberührpunkt. Wie für die Drehung entlang der Vorzugsrichtung beschrieben, kann auch hier ein weiterer Eingriffswinkel α' bzw. ein weiterer Flankenwinkel α' in dem weiteren Eintrittberührpunkt konstruiert werden. Dadurch, dass die antriebsseitigen Zahnflanken und die freilaufendseitigen Zahnflanken der Zähne unterschiedliche Geometrien aufweisen - d.h. das Zahnprofil unsymmetrisch ist - weisen die freilaufendseitigen Zahnflanken in dem weiteren Eintrittberührpunkt einen anderen Eingriffswinkel auf als die antriebsseitigen Zahnflanken in dem Eintrittberührpunkt. Die beiden in Eingriff stehenden Zahnräder des Zahnradsatzes weisen demnach zwei zu Beginn des Eingriffs unterschiedliche Eingriffswinkel α, α' auf.

Mit "Normalschnitt" meint die vorliegende Erfindung einen Schnitt durch das Zahnrad entlang der Normalen zu einer Richtung des Verlaufes der Zahnköpfe. Für sogenannte gerade verzahnte Zahnräder, bei denen die Zahnköpfe entlang der Zahnradachse verlaufen, entspricht der Normalschnitt einem Stirnschnitt. Bei schräg verzahnten Zahnrädern entspricht der Normalschnitt dem Schnitt durch das Zahnrad um den Schrägungswinkel β versetzt zu dem Stirnschnitt. Bei bogenverzahnten Zahnrädern kann ein entsprechender Normalschnitt analog konstruiert werden.

Durch die Asymmetrie des Zahnprofils und die demzufolge unterschiedlichen Eingriffswinkel α, α' zumindest in dem Eintrittsberührpunkt, also zu Beginn des Eingriff, wird die Flächenpressung zumindest in diesem Punkt auf einer antriebsseitigen Zahnflanke (bei Betrieb in Vorzugsrichtung) im Verhältnis zu einer freilaufseitigen Zahnflanke (bei Betrieb entgegen die Vorzugsrichtung) verändert. Insbesondere wird durch eine Vergrößerung des Eingriffswinkels α bzw. Flankenwinkels α zu Beginn des Eingriffs eine erniedrigte Flächenpressung im Berührpunkt erreicht, welches zu einem Radsatz mit erhöhter Lebensdauer führt.

Ferner kann z.B. die sogenannte Teilung - der Abstand von zwei aufeinander folgenden Zähnen - für das jeweilige Zahnrad im Vergleich zu einem Zahnrad mit einem symmetrischen Zahnprofil beibehalten werden. Dazu wird der Zahnflankenwinkel α' der freilaufendseitigen Zahnflanke zumindest an dem Eintrittsberührpunkt im Vergleich zu einem Zahnrad mit symmetrischem Zahnprofil verringert und der Zahnflankenwinkel α der antriebsseitigen Zahnflanke zumindest an dem Eintrittsberührpunkt im Vergleich zu einem Zahnrad mit symmetrischem Zahnprofil erhöht. Die Eingriffstrecke wird im Vergleich zu einem entsprechenden Zahnrad mit symmetrischem Zahnprofil bevorzugt nicht verändert.

Mit anderen Worten, ist es durch die Wahl eines asymmetrischen Zahnprofils, insbesondere dadurch, dass zumindest zu Beginn des Eingriffs beide Zahnflanken einen unterschiedlichen Eingriffswinkel α, α' bzw. entsprechende unterschiedliche Zahnflankenwinkel α, α' aufweisen, möglich, die Lebensdauer des Zahnradsatzes welcher in nur einer Vorzugsrichtung betrieben wird, zu erhöhen.

Die Erfindung geht ferner davon aus, dass der Eingriffswinkel α während des Eingriffs auf einer Antriebsseite der Zähne eines der Zahnräder einen von einer freilaufenden Seite der Zähne desselben Zahnrades unterschiedlichen Verlauf aufweist.

Nur im Spezialfall von evolventenverzahnten Zahnrädern ist der Eingriffswinkel α, α' während der gesamten Zeit des Eingriffes konstant. Dementsprechend bildet die Eingriffsstrecke, d.h. der Verlauf des geometrischen Ortes der jeweiligen Berührpunkte von sich während des Eingriffes berührenden Zahnflanken, eine Gerade, welche durch den Wälzpunkt verläuft und eine Tangente an den Grundkreisdurchmesser der beiden Zahnräder ist.

Im Falle einer anderen Geometrie des Zahnprofils ist die Eingriffsstrecke nicht durch eine Gerade gegeben. Der Eingriffswinkel durchläuft somit während des Eingriffs unterschiedliche Werte. Gemäß dieser bevorzugten Weiterbildung soll demnach der Eingriffswinkel vorzugsweise während des gesamten Eingriffs auf der Antriebsseite der Zähne einen von der freilaufenden Seite der Zähne unterschiedlichen Verlauf aufweisen. Bei einer Drehung der Zahnräder um die Vorzugsrichtung kann während des Eingriffs jedem Berührpunkt ein unterschiedlicher Eingriffswinkel zugeordnet werden.

Bei Drehung entgegen der Vorzugsrichtung kann - wie für die Drehung in Vorzugsrichtung - während des Eingriffs jedem Berührpunkt der sich gegenüberliegenden freilaufendseitigen Zahnflanken ein üblicherweise unterschiedlicher Eingriffswinkel α' zugeordnet werden. Der Verlauf des Eingriffswinkels α bei Drehung in Vorzugsrichtung ist verschieden von dem Verlauf des entsprechenden Eingriffswinkels α' bei Drehung entgegen der Vorzugsrichtung.

Die Zahnräder des erfindungsgemäßen Zahnradsatzes weisen vorzugsweise in dem Bereich, in dem sich gegenüberliegende Zahnflanken während des Eingriffs berühren, keine hinterschnittige Konturen auf. Hinterschnitte, die nicht in diesen sogenannten effektiven Flankenbereichen liegen, können indes trotzdem vorhanden sein.

Gemäß einer weiteren bevorzugten Weiterbildung der Erfindung soll der Eingriffswinkel auf der Antriebsseite in einem Bereich von 25° bis 45° liegen, insbesondere in einem Bereich von 28° bis 32°. Alternativ oder ergänzend soll der Eingriffswinkel der freilaufenden Seite in einem Bereich von 10° bis 20°, insbesondere in einem Bereich von 14° bis 16° liegen. Je größer der Eingriffswinkel α bzw. Flankenwinkel α gewählt wird, desto stärker wird die Flächenpressung reduziert bzw. die Zahnfußfestigkeit und die Flankentragfestigkeit erhöht. Hierdurch wird aber bei Zahnrädern im Stand der Technik zwangsläufig die Teilung erhöht. Ein Ziel der bevorzugten Weiterbildung ist es, insbesondere die Teilung beizubehalten und gleichzeitig den Eingriffswinkel α auf einer Zahnflanken (der antriebsseitigen Zahnflanke) des Zahns so weit zu erhöhen, wie der Eingriffswinkel α' auf anderen Zahnflanke des Zahnes (der freilaufseitigen Zahnflanke) erniedrigt wird. Die oben genannten Intervalle haben sich für den Einsatz in Drehflügelflugzeugen als geeignet erwiesen, die Lebensdauer der Zahnräder zu erhöhen. Gemäß der Erfindung ist die Summe der jeweiligen Eingriffswinkels α auf der Antriebsseite und auf der freilaufenden Seite an dem jeweiligen entsprechenden Berührpunkt, welcher sich bei Drehung der Zahnräder entgegen der Vorzugsrichtung ergibt, konstant zu halten.

Wenn keine Evolventenverzahnung vorliegt, variiert der Eingriffswinkel α,α' während des Eingriffs sowohl auf der Antriebsseite als auch auf der freilaufenden Seite. In diesem Fall soll der Eingriffswinkel α, α' besonders bevorzugt derart gewählt werden, dass er den in Anspruch 2 angegebene Bereich nicht verlässt. Besonders bevorzugt sind die Zahnräder bei variierendem Eingriffswinkel α, α' während des Eingriffes so ausgebildet, dass die Summe der beiden Eingriffswinkel α, α' während des Eingriffes konstant bleibt.

Beide Zahnräder können als Evolventenzahnräder ausgeführt sein. Es ist besonders günstig ein Zahnprofil zu wählen, bei dem eine Evolventengeometrie der einen Zahnflanke von einer Evolventengeometrie der anderen Zahnflanke des selben Zahnes unterschiedlich ist. Weil bei Evolventenzahnrädern die Eingriffswinkel α, α' bzw. die Flankenwinkel α, α' während des Eingriffs konstant sind, weisen die Zahnräder des erfindungsgemäßen Zahnradsatzes während des Eingriffs in Vorzugsrichtung einen anderen Eingriffswinkel α auf als während des Eingriffs entgegen der Vorzugsrichtung. Auch bei der Evolventenverzahnung gelten die in Anspruch 2 definierten bevorzugten Intervalle. Beispielhaft sei ein in dem angegebenen Bereich liegendes Winkelpaar mit einem Eingriffswinkel α der Antriebsseite von 30° und mit einem gegebenen Eingriffswinkel α' der freilaufende Seite von 15° genannt.

Üblicherweise können die Zahnräder des Zahnradsatzes als Zylinderräder, Kegelräder, Zylinderschraubräder bzw. Schneckenräder ausgebildet sein. Besonders bevorzugt sind jedoch Kegelräder zu wählen. Kegelräder weisen üblicherweise senkrecht, bzw. geneigt oder radial gegeneinander versetzte Achsen auf. Gerade für den Einsatz von Zahnradsätzen in Luftflügelflugzeugen, wie z.B. im Hauptrotorgetriebe von Hubschraubern, ist der Einsatz von Kegelrädern aus Gründen eines geringen Verschleißes bevorzugt.

Gemäß einer bevorzugten Weiterbildung der Erfindung und zur Erhöhung eines geräuschärmeren Laufes sind die Zahnräder nicht gerade, sondern schräg oder bogenverzahnt ausgeführt.

Gemäß eines nebengeordneten Aspekts und zur Lösung des Problems bezüglich des Drehflügelflugzeuggetriebes gibt die vorliegende Erfindung ein Drehflügelflugzeuggetriebe für ein einen Antrieb, einen Hauptrotor oder einen Heckrotor aufweisendes Drehflügelflugzeug mit den Merkmalen von Anspruch 5 an.

Mit Drehflügelflugzeugen meint die vorliegende Erfindung alle Fluggeräte, die sich drehende Flüge aufweisen, insbesondere Hubschrauber, Tragschrauber, Verbundschrauber, Kombinationsflugschrauber und Wandelflugzeuge. Im einfachsten Fall kann ein einzelner Zahnradsatz ein erfindungsgemäßes Getriebe ausbilden, welcher z.B. ein Moment und eine Drehzahl von einem Antrieb auf einen Haupttragrotor bzw. auf einen Heckrotor überträgt. Das erfindungsgemäße Getriebe kann bei Drehung der Zahnräder in Vorzugsrichtung verschleißarm betrieben werden.

Ein erfindungsgemäßer Antriebsstrang für ein Drehflügelflugzeug, der sich verschleißarm betreiben lässt wird in Anspruch 6 angegeben. Ein solcher Antriebsstrang enthält einen Antrieb und einen in Kraftflussrichtung zwischen dem Antrieb und einem Haupttragrotor angeordnetes Übersetzungsgetriebe sowie einen in Kraftflussrichtung zwischen dem Antrieb und dem Hauptrotor angeordnetes Hauptrotorgetriebe. Ein solcher Haupttragrotor trägt zumindest dazu bei das Drehflügelflugzeug in der Luft zu halten, das heißt erzeugt einen Auftrieb. Unter einem Übersetzungsgetriebe ist ein solches Getriebe zu verstehen, welches eine Drehzahlübersetzung von einer vergleichsweise hohen (Antriebs)-Drehzahl zumindest teilweise auf eine vergleichsweise niedrige Drehzahl (des Haupttragrotors) reduziert. Bei einem Haupttragrotorgetriebe stehen die mit in Eingriff stehenden Zahnrädern versehenen Wellen, d.h. eine Eingangswelle, die üblicherweise einer Antriebswelle des Antriebs zugeordnet ist, und eine Ausgangswelle schräg bzw. nicht parallel zueinander. Die Ausgangswelle erstreckt sich in der Regel in Richtung des Hauptrotors. Üblicherweise erstreckt sich die Eingangswelle des Haupttragrotorgetriebes in Längsrichtung des Drehflügelflugzeugs, wohingegen sich im die zweite Welle üblicherweise in Richtung des Haupttragrotors, somit in Höhenrichtung des Drehflügelflugzeugs erstreckt.

Das Übersetzungs- und/oder das Hauptrotorgetriebe soll zumindest einen erfindungsgemäßen Zahnradsatz enthalten.

Gemäß einer bevorzugten Weiterbildung enthält der Antriebsstrang ein Zwischengetriebe und/oder ein Heckrotorgetriebe, welches in Kraftflussrichtung zwischen dem Antrieb und dem Heckrotor angeordnet ist. Das Heckrotor- und/oder Zwischengetriebe enthält zumindest einen der erfindungsgemäßen Zahnradsätze.

In dem Heckrotor- und/oder Zwischengetriebe wird die antriebsseitige bzw. hauptrotorseitige Drehzahl in eine heckrotorseitge Drehzahl, d.h. eine Drehzahl des Heckrotors übersetzt. Des Weiteren findet in dem Heckrotor- und/oder dem Zwischengetriebe eine Umlenkung des Kraftflusses von einer Eingangsrichtung hin zu der Richtung des Heckrotors statt. Üblicherweise wird bei Drehflügelflugzeugen das Zwischengetriebe in Kraftflussrichtung hinter dem Haupttragrotorgetriebe und vor dem Heckrotorgetriebe angeordnet. Entsprechend wird eine Antriebsdrehzahl von einem Antrieb über das Übersetzungsgetriebe üblicherweise in eine vorgegebene Drehzahl des Hauptrotors übersetzt. In dem Hauptrotorgetriebe wird die Kraftflussrichtung vorzugsweise aus der Längsrichtung des Drehflügelflugzeugs in eine andere Richtung - in die Richtung des Hauptrotors - übertragen. Das Zwischengetriebe wird eingangsseitig üblicherweise mit der Drehzahl des Hauptrotors beaufschlagt und übersetzt dieses ausgangsseitig in die Drehzahl des Heckrotors. In dem Heckrotorgetriebe wird der Kraftfluss in die durch den Heckrotors vorgegebene Richtung umgeleitet.

Gemäß einem weiteren nebengeordneten Aspekt wird ein Drehflügelflugzeug, insbesondere zu einem, Lastentransport und/oder zu einem Transport von Passagieren vorgeschlagen, welches mit einem Rotor und einem Antrieb für den Rotor ausgestattet ist. Ein solches Drehflügelflugzeug zeichnet sich dadurch aus, dass in Kraftflussrichtung zwischen dem Antrieb und dem Rotor ein Getriebe vorgesehen ist, welches zumindest einen erfindungsgemäßen Zahnradsatz aufweist.

Dabei hat die vorliegende Erfindung insbesondere die Zahnradsätze bei Drehflügelflugzeugen im Blick, die in besonderem Maße beansprucht sind. Um die Materialanforderungen zu verdeutlichen sind nachfolgend beispielhaft einige typische Kennzahlen für Hubschrauber angegeben, auf die sich die bevorzugte Weiterbildung beziehen kann.

Der Antrieb eines Hubschraubers liefert z.B. eine Drehzahl von 12.000 UpM. Die Übersetzung von dem Antrieb zu einem Haupttragstrang liegt im Bereich von 0,01 bis 0,02, die zu der Heckschraube üblicherweise in einem Bereich zwischen 0,2 und 0,3. Das Gewicht eines Hauptuntersetzungsgetriebe des Drehflügelflugzeuges kann im Bereich von 300 kg bis 3000 kg liegen.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1a: eine schematische Teilansicht von zwei in Eingriff stehenden Zahnprofilen eines Zahnradsatzes,
- Fig. 1b: dieselbe Ansicht des Zahnradsatzes aus Figur 1 mit anderen Hilfsgeradenkonstruktionen, und
- Fig. 2: eine schematische Darstellung eines Hauptuntersetzungsgetriebes eines Hubschraubers.

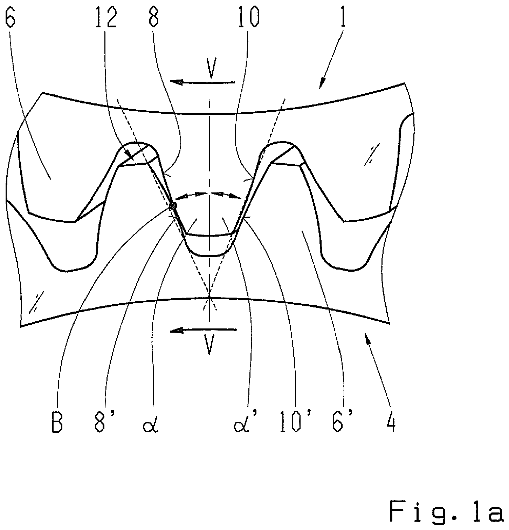

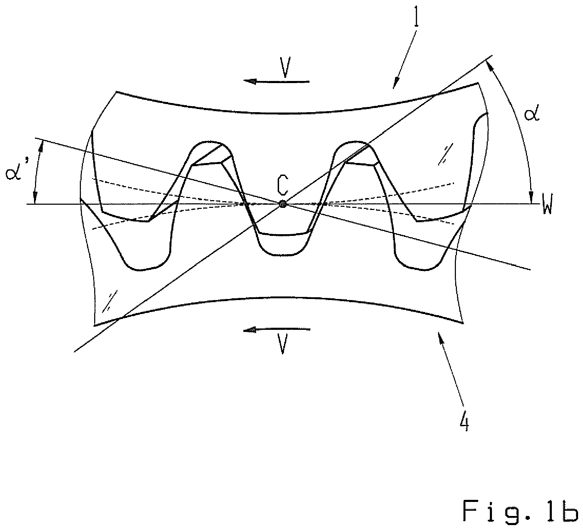

Fig. 1a und 1b zeigen einen Ausschnitt von miteinander in Eingriff stehenden Zahnrädern 1, 4 eines Zahnradsatzes. Bezugszeichen 1 kennzeichnet ein auf einer nicht gezeigten Welle verdrehfest montiertes erstes Zahnrad, welches in Kraftflussrichtung einem Antrieb zugeordnet ist, welches von dem Antrieb in einer Vorzugsrichtung V in Figur 1a im Uhrzeigersinn gedreht wird. Das erste Zahnrad 1 überträgt ein Moment und eine Drehzahl auf ein einer Ausgangsseite des Zahnradsatzes 1, 4 zugeordnetes zweites Zahnrad 4. Dieses ist als Festrad auf einer nicht gezeigten Welle gelagert.

Das erste Zahnrad 1 weist in Eingriff mit Zähnen 6' des zweiten Zahnrades 4 stehende Zähne 6 auf. Jeder Zahn der Zähne 6 des ersten Zahnrades 1 weist eine antriebsseitige Zahnflanke 8 und eine freilaufseitige Zahnflanke 10 auf, und jeder Zahn 6' des zweiten Zahnrades 4 weist eine antriebsseitige Zahnflanke 8' und eine freilaufseitige Zahnflanke 10' auf. Jeweils zwei antriebsseitige Zahnflanken 8, 8' des ersten und zweiten Zahnrades 1, 4 und zwei freilaufseitige Zahnflanken 10, 10' des ersten und zweiten Zahnrades 1, 4 liegen sich gegenüber. Der Zahnradsatz ist in Figur 1a und 1b im Normalschnitt gezeigt. Das Zahnprofil in Bezug auf den Normalschnitt - den Schnitt durch das Zahnrad entlang der Normalen zu einer Richtung des Verlaufes der Zahnköpfe 12 - ist asymmetrisch.

Die Bezeichnung der Zahnflanken als antriebsseitig und freilaufseitig ist auf die Vorzugsrichtung V bezogen.

Wenn die Zahnräder 1, 4 des Zahnradsatzes in Vorzugsrichtung V gedreht werden wird die Drehzahl und das Moment über die antriebsseitige Zahnflanke 8 des ersten Zahnrads 1 in einem Berührpunkt B auf die antriebsseitige Zahnflanke 8' des zweiten Zahnrades 4 übertragen. Die sich gegenüberliegende freilaufseitige Zahnflanke 10 des ersten Zahnrades 1 und freilaufseitige Zahnflanke 10' des zweiten Zahnrades 4 laufen in diesem Fall frei. Die antriebsseitigen Zahnflanken 8, 8' weisen eine von den freilaufseitigen Zahnflanken 10,10' unterschiedliche Evolventengeometrie auf. Aufgrund der Evolventengeometrie weist der Zahnradsatz 1, 4 bei seiner Drehung in Vorzugsrichtung V bei Berührung der sich gegenüberliegenden antriebsseitigen Zahnflanken 8, 8' des ersten und zweiten Zahnrades 1, 4 im Berührpunkt B während des gesamten Eingriffs denselben Eingriffswinkel α auf.

Der Eingriffswinkel α auf der Antriebsseite der Zahnräder 1, 4 und ein Eingriffswinkel α' auf der freilaufenden Seite der Zahnräder 1, 4 entsprechen den in Figur 1a abgetragenen Flankenwinkeln α auf der Antriebsseite bzw. α' auf der freilaufenden Seite. Für den gezeigten Spezialfall der Evolventengeometrie sind ist der jeweilige Eingriffswinkel α bzw. α' auch, wie in Figur 1b schematisch gezeigt, durch den Schnittwinkel zwischen der Tangente im Wälzpunkt C und der durch den Wälzpunkt C verlaufenden Tangente an die Grundkreisdurchmesser der beiden Zahnräder 1, 4 gegeben.

Der jeweilige Eingriffswinkel α bzw. α' ist auch durch den jeweiligen Winkel zwischen der Normalen der Tangenten im Berührpunkt B, welche durch den Wälzpunkt C verläuft, und der Wälzfläche W gegeben. Der jeweilige Eingriffswinkel α bzw. α' entspricht ebenso dem Flankenwinkel α bzw. α', dem Winkeln zwischen der Tangente im Berührpunkt B und der durch den Zahnkopf 12 verlaufenden Normale auf die Wälzfläche W.

In dem in Fig. 1a und 1b dargestellten Ausführungsbeispiel beträgt demnach der Flankenwinkel bzw. Eingriffswinkel α der antriebsseitigen Zahnflanke 8, 8' ca. 30°. Der Flankenwinkel bzw. Eingriffswinkel α' der freilaufseitigen Zahnflanke 10,10' beträgt in dem gezeigten Ausführungsbeispiel ca. 15°.

Zu der Bestimmung des Eingriffswinkel α' der freilaufenden Seite wird der Zahnradsatz entgegen der Vorzugsrichtung V gedreht. Hierbei berühren sich die freilaufseitigen Zahnflanken 10,10' in einem weiteren nicht gezeigten Berührpunkt. Der Winkel zwischen der Normale der Tangente in dem Berührpunkt der freilaufseitigen Zahnflanke 10,10' und dem Wälzpunkt C bei Drehung entgegen der Vorzugsrichtung entspricht somit dem Eingriffswinkel α'.

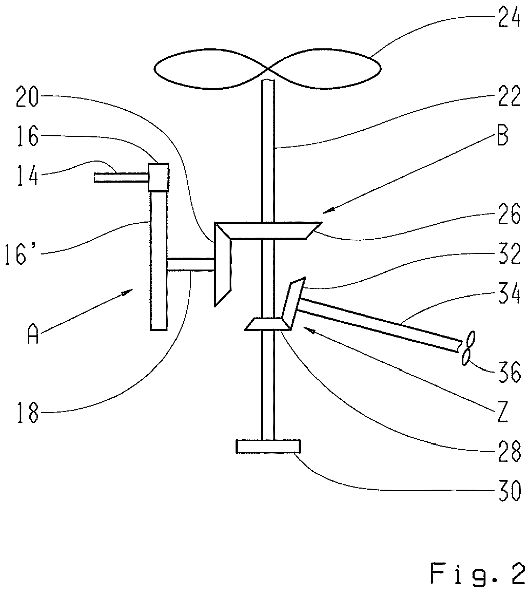

In Fig. 2 ist schematisch ein Teil eines Hubschrauberantriebsstrangs gezeigt. Von einem nicht gezeigten Antrieb wird ein Moment und eine Drehzahl über eine Eingangswelle 14 über ein kleines erstes Stirnrad 16 auf ein in Eingriff mit diesem stehendes, auf einer ersten Zwischenwelle 18 gelagertes großes zweites Stirnrad 16' übertragen. Die beiden Zahnräder 16, 16' bilden demnach einen Zahnradsatz.

An einem dem zweiten Stirnrad 16' gegenüberliegenden Ende der ersten Zwischenwelle 18 ist ein erstes Kegelrad 20 ausgebildet, welches das Moment und die Drehzahl von der Eingangswelle 14 über die erste Zwischenwelle 18 an eine sich senkrecht zu dieser erstreckende Hauptrotorwelle 22 überträgt, die einen dieser zugeordneten Hauptrotors 24 antreibt.

An der Hauptrotorwelle 22 ist ein sich senkrecht zu dem ersten Kegelrad 20 erstreckendes und mit diesem in Eingriff stehendes Hauptrotorkegelrad 26, ein erstes Heckrotorkegelrad 28 sowie ein Anschlussstirnrad 30 ausgebildet. Das erste Kegelrad 20 überträgt die Drehzahl und das Moment über das Hauptrotorkegelrad 26 auf den Hauptrotor 24. Das erste Heckrotorkegelrad 28 überträgt die Drehzahl und das Moment der Hauptrotorwelle 22 über ein mit diesem in Eingriff stehendes zweites Heckrotorkegelrad 32 auf eine Heckrotorzwischenwelle 34, welche zu einem Heckrotor 36 führt.

Das Anschlussstirnrad 30 überträgt über mit diesem in Eingriff stehende nicht gezeigte weitere Stirnräder das Moment und die Drehzahl auf Nebenaggregate, wie ein Hydrauliksystem oder einen Wechselstromgenerator.

Die Übersetzung der hohen, an der Eingangswelle 14 anliegenden Eingangsdrehzahl, erfolgt hauptsächlich über den von dem ersten Stirnrad 16 und dem zweiten Stirnrad 16' gebildeten Stirnradsatz, welcher somit als Übersetzungsgetriebe A dient. Sowohl die Eingangswelle 14 als auch die erste Zwischenwelle 18 verlaufen üblicherweise in horizontaler Richtung, d.h. in Längsrichtung des Hubschraubers. Um die Drehzahl in vertikale Richtung zu übertragen, ist in Kraftflussrichtung hinter dem von dem ersten und zweiten Stirnrad 16, 16' gebildeten Übersetzungsgetriebe A ein Haupttragrotorgetriebe B angeordnet, welches durch das erste Kegelrad 20 und das mit diesem in Eingriff stehende Hauptrotorkegelrad 26 gebildet ist. Aufgrund des ähnlichen Durchmessers der beiden in Eingriff stehenden Kegelräder 20, 26 findet in diesem Bereich keine signifikante Veränderung der Drehzahlen von dem Antrieb auf den Hauptrotor 24 statt.

Um die Drehzahl und das Moment von dem Antrieb ebenso auf den Heckrotor 36 übertragen zu können, steht das erste Heckrotorkegelrad 28 mit dem zweiten Heckrotorkegelrad 32 in Eingriff. Hierdurch wird die Drehzahl und das Moment aus der vertikalen Richtung wieder in eine annähernd horizontale oder schräg horizontale Richtung zu dem Heckrotor 36 umgelenkt. Das mit dem zweiten Heckrotorkegelblatt 32 in Eingriff stehende erste Heckrotorkegelrad 28 ist als Zwischengetriebe Z zu dem Heckrotor vorgesehen. Üblicherweise folgt ein nicht dargestelltes Getriebe, welches nun die an der Hauptrotorwelle 22 anliegende Drehzahl in eine für den Heckrotor 32 geeignete Drehzahl übersetzt. Im Allgemeinen ist die Heckrotordrehzahl höher als die Hauptrotordrehzahl.

Zumindest ein Zahnradsatz vorzugsweise alle Zahnradsätze können Zahnräder mit der erfindungsgemäßen asymmetrischen Zahnprofilgeometrie enthalten. Besonders bevorzugt ist es diese dort einzusetzen, wo es gilt, hohe Flächenpressungskräfte zu verhindern.

### Bezugszeichen

- 1: erstes Zahnrad
- 4: zweites Zahnrad
- 6, 6': Zahn
- 8, 8': antriebsseitige Zahnflanke
- 10, 10': feilaufseitige Zahnflanke
- 12: Zahnkopf
- 14: Eingangswelle
- 16: erstes Stirnrad
- 16': zweites Stirnrad
- 18: erste Zwischenwelle
- 20: erstes Kegelrad
- 22: Hauptrotorwelle
- 24: Hauptrotor
- 26: Hauptrotorkegelrad
- 28: erstes Heckrotorkegelrad
- 30: Anschlussstirnrad
- 32: zweites Heckrotorkegelrad
- 34: Heckrotorzwischenwelle
- 36: Heckrotor
- V: Vorzugsrichtung
- α: antriebsseitiger Zahnflankenwinkel / antriebsseitiger Eingriffswinkel
- α': freilaufseitiger Zahnflankenwinkel/ freilaufseitiger Eingriffswinkel
- B: Berührpunkt
- W: Wälzfläche
- A: Übersetzungsgetriebe
- B: Haupttragrotorgetriebe
- C: Wälzpunkt
- Z: Zwischengetriebe

## Patentansprüche

1. Zahnradsatz, insbesondere für ein Drehflügelflugzeug mit zwei in Eingriff stehenden auf jeweils einer Welle gelagerten Zahnrädern (1, 4), wobei die Zahnräder (1, 4) bei Drehung in eine Vorzugsrichtung in einem Normalschnitt zu Beginn eines Eingriffs einen Eingriffswinkel (α) aufweisen, und bei Drehung entgegen der Vorzugsrichtung in einem Normalschnitt zu Beginn eines Eingriffs einen zum zuvor genannten Eingriffswinkel (α) unterschiedlichen Eingriffswinkel (α') aufweisen, wobei die Eingriffswinkel (α, α') während des Eingriffs auf einer Antriebsseite der Zähne (6, 6') eines der Zahnräder (1, 4) einen von einer freilaufenden Seite der Zähne (6, 6') des selben Zahnrades unterschiedlichen Verlauf aufweisen,
**dadurch gekennzeichnet dass**,
die Summe des jeweiligen Eingriffswinkels (α) auf der Antriebsseite, welcher sich an dem Berührpunkt bei Drehung der Zahnräder (1,4) in Vorzugsrichtung ergibt, und des Eingriffswinkels (α') auf der freilaufenden Seite an dem jeweiligen entsprechenden Berührpunkt, welcher sich bei Drehung der Zahnräder (1,4) entgegen der Vorzugsrichtung ergibt, konstant ist.

2. Zahnradsatz nach Anspruch 1, **dadurch gekennzeichnet, dass** der Eingriffswinkel (α) auf der Antriebsseite in einem Bereich von 25°bis 45°liegt, insbesondere in einem Bereich von 28°bis 32°liegt und/oder dass der Eingriffswinkel (α') der freilaufenden Seite in einem Bereich von 10° bis 20°, insbesondere in einem Bereich von 14°bis 16°liegt.

3. Zahnradsatz nach einem der vorherigen Ansprüche, **dadurch gekennzeichnet, dass** die beiden Zahnräder (1, 4) Kegelräder sind.

4. Zahnradsatz nach einem der vorherigen Ansprüche, **dadurch gekennzeichnet, dass** die beiden Zahnräder (1, 4) schräg- oder bogenverzahnt sind.

5. Drehflügelflugzeuggetriebe (16, 16'; 20, 26; 28, 32; A; B; Z) für ein einen Antrieb, einen Haupttragrotor (24) und/oder einen Heckrotor (36) aufweisendes Drehflügelflugzeug, welches ein in dem Antrieb erzeugtes Moment auf den Haupttragrotor (24) und/oder den Heckrotor (36) überträgt, **gekennzeichnet durch** einen in Kraftflussrichtung zwischen dem Antrieb und dem Haupttragrotor (24) oder dem Heckrotor (36) angeordneten Zahnradsatz nach einem der Ansprüche 1 bis 4.

6. Antriebsstrang für ein Drehflügelflugzeug mit einem Antrieb, einem in Kraftflussrichtung zwischen dem Antrieb und einem Haupttragrotor (24) angeordneten Übersetzungsgetriebe (16, 16'; A), zumindest einem in Kraftflussrichtung zwischen dem Antrieb und dem Haupttragrotor (24) angeordneten Hauttragrotorgetriebe (20, 26; B), **dadurch gekennzeichnet, dass** das Übersetzungsgetriebe (16, 16') und/oder das Haupttragrotorgetriebe (20, 26) zumindest einen Zahnradsatz nach einem der Ansprüche 1 bis 4 enthält.

7. Antriebsstrang für ein Drehflügelflugzeug nach Anspruch 5 mit einem in Kraftflussrichtung zwischen dem Antrieb und einem Heckrotor (36) angeordneten Heckrotorgetriebe und/oder Zwischengetriebe (28, 32; Z) **dadurch gekennzeichnet, dass** das Heckrotorgetriebe und/oder das Zwischengetriebe (28, 32; Z) zumindest einen Zahnradsatz nach einem der Ansprüche 1 bis 4 enthält.

8. Drehflügelflugzeug, insbesondere zu einem Lastentransport und/oder zu einem Transport von Passagieren, mit einem Rotor (24, 36) und einem Antrieb für den Rotor (24, 36), **gekennzeichnet durch** zumindest ein in Kraftflussrichtung zwischen dem Antrieb und dem Rotor (24, 36) vorgesehenes Getriebe (16, 16'; 20, 26; 28, 32; A; B; Z) welches zumindest einen Zahnradsatz nach einem der Ansprüche 1 bis 4 enthält.

## Claims

1. Gearwheel set, in particular for a gyroplane having two gearwheels (1, 4) which are in engagement and are each mounted on a shaft, wherein in the case of rotation in a preferred direction the gearwheels (1, 4) have an engagement angle (α) in a perpendicular section at the start of engagement, and in the case of rotation counter to the preferred direction they have an engagement angle (α') which is different from the previously specified engagement angle (α) in a perpendicular section at the start of an engagement, wherein during the engagement the engagement angles (α, α') on a drive side of the teeth (6, 6') of one of the gearwheels (1, 4) have a profile which is different from a free-wheeling side of the teeth (6, 6') of the same gearwheel,
**characterized in that**
the sum of the respective engagement angle (α) on the drive side which arises at the point of contact when the gearwheels (1, 4) rotate in the preferred direction and of the engagement angle (α') on the free-wheeling side at the respective corresponding contact point which arises when the gearwheels (1, 4) rotate counter to the preferred direction is constant.

2. Gearwheel set according to Claim 1, **characterized in that** the engagement angle (α) on the drive side is in a range from 25° to 45°, in particular in a range from 28° to 32°, and/or **in that** the engagement angle (α') of the free-wheeling side is in a range from 10° to 20°, in particular in a range from 14° to 16°.

3. Gearwheel set according to one of the preceding claims, **characterized in that** the two gearwheels (1, 4) are level gearwheels (1, 4).

4. Gearwheel set according to one of the preceding claims, **characterized in that** the two gearwheels (1, 4) are helically toothed or spiral toothed.

5. Gyroplane transmission (16, 16'; 20, 26; 28, 32; A; B; Z) for a gyroplane which has a drive, a main carrying rotor (24) and/or a rear rotor (36) and transmits a torque generated in the drive to the main carrying rotor (24) and/or the rear rotor (36), **characterized by** a gearwheel set according to one of Claims 1 to 4, which gearwheel set is arranged between the drive and the main carrying rotor (24) or the rear rotor (36) in the direction of power flux.

6. Drive train for a gyroplane having a drive, a drive transmission (16, 16'; A) arranged between the drive and a main carrying rotor (24) in the direction of power flux, and at least one main carrying rotor transmission (20, 26; B) arranged between the drive and the main carrying rotor (24) in the direction of power flux, **characterized in that** the drive transmission (16, 16') and/or the main carrying rotor transmission (20, 26) contains at least one gearwheel set according to one of Claims 1 to 4.

7. Drive train for a gyroplane according to Claim 5, having a rear rotor transmission and/or intermediate transmission (28, 32; Z) arranged between the drive and a rear rotor (36) in the direction of power flux, **characterized in that** the rear rotor transmission and/or the intermediate transmission (28, 32; Z) contains at least one gearwheel set according to one of Claims 1 to 4.

8. Gyroplane, in particular for transporting loads and/or for transporting passengers, having a rotor (24, 36) and a drive for the rotor (24, 36), **characterized by** at least one transmission (16, 16'; 20, 26; 28, 32; A; B; Z) which is provided between the drive and the rotor (24, 36) in the direction of power flux and contains at least one gearwheel set according to one of Claims 1 to 4.

## Revendications

1. Train d'engrenages, en particulier pour un giravion avec deux roues dentées en prise (1, 4) montées respectivement sur un arbre, dans lequel les roues dentées (1, 4) présentent lors d'une rotation dans une direction préférentielle dans une coupe normale au début d'une prise un angle de prise (α) et présentent lors d'une rotation dans la direction opposée à la direction préférentielle dans une coupe normale au début d'une prise un angle de prise (α') différent de l'angle de prise (α) mentionné antérieurement, dans lequel les angles de prise (α, α') présentent pendant la prise sur le côté d'entraînement des dents (6, 6') d'une des roues dentées (1, 4) une allure différente du côté à course libre des dents (6, 6') de la même roue dentée,
**caractérisé en ce que** la somme de l'angle de prise respectif (α) sur le côté d'entraînement, qui s'établit au point de contact lors de la rotation des roues dentées (1, 4) dans la direction préférentielle, et de l'angle de prise (α') sur le côté à course libre au point de contact respectif correspondant, qui s'établit lors de la rotation des roues dentées (1, 4) dans la direction opposée à la direction préférentielle, est constante.

2. Train d'engrenages selon la revendication 1,
**caractérisé en ce que** l'angle de prise (α) sur le côté d'entraînement se situe dans une plage de 25° à 45°, en particulier dans une plage de 28° à 32°, et/ou **en ce que** l'angle de prise (α') du côté à course libre se situe dans une plage de 10° à 20°, en particulier dans une plage de 14° à 16°.

3. Train d'engrenages selon l'une quelconque des revendications précédentes, **caractérisé en ce que** les deux roues dentées (1, 4) sont des roues coniques.

4. Train d'engrenages selon l'une quelconque des revendications précédentes, **caractérisé en ce que** les deux roues dentées (1, 4) présentent des dentures inclinées ou courbes.

5. Transmission de giravion (16, 16'; 20, 26; 28, 32; A; B; Z) pour un giravion présentant un entraînement, un rotor porteur principal (24) et/ou un rotor de queue (36), qui transmet un couple produit dans l'entraînement au rotor porteur principal (24) et/ou au rotor de queue (36), **caractérisée par** un train d'engrenages selon l'une quelconque des revendications 1 à 4 disposé dans la direction du flux de force entre l'entraînement et le rotor porteur principal (24) ou le rotor de queue (36).

6. Chaîne cinématique pour un giravion avec un entraînement, un engrenage de réduction (16, 16'; A) disposé entre l'entraînement et le rotor porteur principal (24), au moins un engrenage de rotor porteur principal (20, 26; B) disposé dans la direction du flux de force entre l'entraînement et le rotor porteur principal (24), **caractérisée en ce que** l'engrenage de réduction (16, 16') et/ou l'engrenage de rotor porteur principal (20, 26) contient au moins un train d'engrenages selon l'une quelconque des revendications 1 à 4.

7. Chaîne cinématique pour un giravion selon la revendication 5 avec un engrenage de rotor de queue et/ou un engrenage intermédiaire (28, 32; Z) disposé entre l'entraînement et un rotor de queue (36), **caractérisée en ce que** l'engrenage de rotor de queue et/ou l'engrenage intermédiaire (28, 32; Z) contient au moins un train d'engrenages selon l'une quelconque des revendications 1 à 4.

8. Giravion, en particulier pour un transport de charges et/ou pour un transport de passagers, avec un rotor (24, 36) et un entraînement pour le rotor (24, 36), **caractérisé par** au moins un engrenage (16, 16'; 20, 26; 28, 32; A; B; Z) prévu dans la direction du flux de force entre l'entraînement et le rotor (24, 36), qui contient au moins un train d'engrenages selon l'une quelconque des revendications 1 à 4.
